Europäisches Patentamt

European Patent Office

Office européen des brevets

(19)

(11) Veröffentlichungsnummer: **0 083 444**
**A1**

(12) # EUROPÄISCHE PATENTANMELDUNG

(21) Anmeldenummer: 82112008.6

(22) Anmeldetag: 24.12.82

(51) Int. Cl.³: **C 02 F 1/48,** B 03 C 1/12,
B 03 C 1/28

(30) Priorität: 29.12.81 DE 8138088 U
21.12.82 DE 3247218

(43) Veröffentlichungstag der Anmeldung: **13.07.83**
**Patentblatt 83/28**

(84) Benannte Vertragsstaaten: **AT BE CH FR GB IT LI LU NL
SE**

(71) Anmelder: **Firma Bruno M. Klarner, Unterdorf 69,
D-6114 Gross Umstadt-Raibach (DE)**
Anmelder: **Firma K. + D. Wichmann Grundstücks- und
Handelsgesellschaft, Grosser Sand 83-85,
D-2082 Ütersen (DE)**

(72) Erfinder: **Klarner, Bruno M., Unterdorf 69, D-6114 Gross
Umstadt-Raibach (DE)**
Erfinder: **Wichmann, Dieter, Grosser Sand 83-85,
D-2082 Uetersen (DE)**

(74) Vertreter: **Meier, Robert, Dipl.-Ing., Patentanwalt
Dipl.-Ing. Robert Meier Auf dem Mühlberg 16,
D-6000 Frankfurt/Main (DE)**

(54) **Magnetischer Aufbereiter für Flüssigkeiten.**

(57) Ein magnetischer Aufbereiter (1, 20) für Flüssigkeiten vorzugsweise Wasser, mit einem zweiteiligen Gehäuse (2), welches außen Anschlüsse (3a, 3b, 24, 25) für flüssigkeitsführende Zu- oder Ableitungen bzw. Absperrorgane und innen eine Anordnung für die Führung der Flüssigkeit und die Halterung wenigstens eines Permanentmagneten aufweist, ist für die Führung der Flüssigkeit und für die Halterung der Permanentmagneten entweder mit einer Umlenkglocke (26) und einem konzentrisch darin verlaufenden Rohr (31) oder mit einem Rotor (8) ausgerüstet. Im ersten Fall ist das erste Ende (32) des Rohres unter Belassung wenigstens eines Flüssigkeitsdurchlaufes (38) gegenüber der Umlenkglocke angeordnet und das zweite Ende (34) mit dem Zu- oder Ablaufanschluß (24, 25) eines Gehäuseteiles (22, 23) verbunden. Im zweiten Fall ist der Rotor mit zumindest einem spiralförmig verschraubten Kanal (12) versehen, der zumindest streckenweise von einem Permanentmagnet (13) begrenzt ist.

- 1 -

## Magnetischer Aufbereiter für Flüssigkeiten

Die Erfindung bezieht sich auf einen magnetischen Aufbereiter für Flüssigkeiten, vorzugsweise Wasser, mit einem zweiteiligen Gehäuse, welches außen Anschlüsse für flüssigkeitsführende Zu- oder Ableitungen bzw. Absperrorgane wie Hähne, Ventile o.dgl. und innen eine Anordnung für die Führung der Flüssigkeit und die Halterung wenigstens eines Elektromagneten aufweist.

Seit langem ist bekannt, daß magnetische Felder Flüssigkeiten, vorzugsweise Wasser, aufbereiten können. Durch zahlreiche Versuche wurde herausgefunden, daß magnetisch aufbereitetes Gießwasser positive Auswirkungen auf die Keimfähigkeit von Pflanzensamen und auf das Wachstum der Pflanzen besitzt. Magnetisch aufbereitetes bzw. "polarisiertes" Wasser entwickelt auch positive Einflüsse bei der Tieraufzucht. Bekannt geworden sind auch Erfolge mit polarisiertem Wasser bei der Reduzierung von Kesselstein in Heizungsanlagen oder Wasserleitungen. In der Medizin haben Versuchsreihen überdies gezeigt, daß Speisen, die mit aufbereitetem Wasser zubereitet waren, beispielsweise Blasenleiden lindern bzw. heilen können.

Derartige Versuche wurden bisher mit unterschiedlichen, mehr oder weniger empirisch konstruierten Geräten durchgeführt. Bekannt geworden sind beispielsweise zylinderförmige Permanentmagnete, die in einer magnetischen Rohrleitung unter Belassung eines Flüssigkeitsdurchlaufes so angeordnet sind, daß gleichnamige Pole aneinanderliegen. Hierdurch entstehenden wechselnde Magnetfelder im Flüssigkeitsdurchlauf.

Vergleichbare wechselnde Magnetfelder können erzeugt werden durch Spulen, die um eine Flüssigkeitsleitung aus Glas herum angeordnet sind, innerhalb der konzentrisch ein Eisenkern so angeordnet ist, daß zwischen diesem und der Glaswand ein Flüssigkeitsdurchlauf verbleibt. Die Spulen sind entweder von Wechselstrom durchflossen oder derart von Gleichstrom, daß der Flüssigkeitsdurchlauf von magnetischen Wechselfeldern durchsetzt wird.

Bekannt geworden ist schließlich auch eine Versuchsanordnung mit einem Kunststoffrohr und außerhalb davon angeordneten Permanentmagneten, deren Nord-Süd-Pole einander gegenüberliegen.

Allgemein haben die Versuche ergeben, daß eine Aufbereitung von Flüssigkeit, vorzugsweise von Wasser, durch magnetische Wechselfelder vornehmlich einen Niederschlag kalciumhaltiger Salze vermindern, wo hingegen die Aufbereitung der Flüssigkeit durch magnetische Gleichfelder kaum einen Einfluß auf die Salzausscheidung, sondern eine Stimulierung des Pflanzenwachstums zur Folge hat.

Ein erster für die allgemeine Benutzung bestimmter magnetischer Wasseraufbereiter ist gekennzeichnet durch einen Durchflußspalt für Wasser, der sich in einem aus magnetischem Material hergestellten ringförmigen Körper befindet, der zwischen zwei entgegengesetzt zueinander angeordneten Zufluß- bzw. Abflußdüsen angeordnet ist, die sich von den Zufluß- bzw.
Abflußöffnungen hin zu der Mitte des Wasseraufbereiters
konisch aufweiten und im mittleren Teil des Wasseraufbereiters in eine Zylinderform übergehen (DE-GM
77 08 271).

Obzwar sich hiermit ein relativ starkes Magnetfeld
erzielen läßt, wobei die Anordnungen zur Rückführung
der magnetischen Kraftlinien vermieden werden, sind
die Flüssigkeitsmengen, die sich damit aufbereiten
lassen, relativ gering. Außerdem ist das Magnetfeld
nicht variierbar. Hinzu kommt, daß Strömungsverluste
im Aufbereiter und eine verhältnismäßig voluminöse
Konstruktion in Kauf genommen werden müssen.

Dem gegenüber liegt der vorliegenden Erfindung die
Aufgabe zugrunde, aus einfachen Permanentmagneten und
preiswert herstellbaren Einzelteilen einen magnetischen
Aufbereiter für Flüssigkeiten, vorzugsweise Wasser,
mit einer großen Variationsmöglichkeit zur Gestaltung
optimaler magnetischer Beeinflussungen der Flüssigkeit
bei geringem Durchflußwiderstand zu schaffen.

Gelöst wird diese Aufgabe in einem ersten Ausführungsbeispiel dadurch, daß das Gehäuse einen Rotor aufnimmt,
in dem zumindest ein spiralenförmig geschraubter Kanal
eingegliedert ist, der zumindest streckenweise von
einem Permanentmagneten begrenzt ist.

Dieses Konzept ermöglicht es bei kleinstem Durchmesser
des Gehäuses eine große Strecke des Durchströmungsweges mit dem magnetischen Wirkungsfeld zu durchsetzen
und gleichzeitig der Strömung - bedingt durch die Drehung
des Rotors - einen möglichst geringen Strömungswiderstand entgegenzusetzen, so daß der Druckverlust trotz
sehr großer Polarisierungsstrecke extrem klein gehalten werden kann. Dieses Ausführungsbeispiel der Erfindung eignet sich dadurch auch für den Anschluß an Niederdruckleitungen, so daß das Einsatzgebiet des Flüssigkeitsaufbereiters stark erweitert wird. Das erfindungsgemäße Konzept zeichnet sich insbesondere dadurch aus, daß der Raum, den die Magnete beanspruchen, positiv zur Erfüllung einer Führungsfunktion für die Durchtrittsströmung herangezogen wird. Auf diese Weise ergibt sich in Kombination mit der erfindungsgemäßen Kanalführung ein äußerst raumsparendes Gesamtkonzept.

Im einzelnen weist der Rotor im wesentlichen die Form eines hohlen, sich in Durchströmungsrichtung erweiternden Kegelstumpf mit fast annähernd gleichbleibender Dicke auf. Das Gehäuse umgibt die innere und die äußere Kegelstumpfmantelfläche zur Ausbildung eines Durchströmungskanals mit im wesentlichen konstanten Durchtrittsquerschnitten.

Der Rotor besitzt nur ein sehr geringes Massenträgheitsmoment und kann mit geringem Aufwand, beispielsweise im Spritzgießverfahren, hergestellt werden. Dadurch, daß auf der gesamten Durchströmwegstrecke ein praktisch gleichbleibender Durchströmquerschnitt eingehalten wird, können keine Verwirblungsverluste auftreten, so daß der strömungstechnische Wirkungsgrad des magnetischen Flüssigkeitsaufbereiter weiter angehoben wird.

Erfindungsgemäß sind die in den Rotor eingelassenen Permanentmagnete gleich dick wie der Rotor an dieser Stelle. Dieses hat zur Folge, daß die Durchtrittsströmung sowohl auf der Oberseite des Rotors aus auch auf seiner Unterseite vom magnetischen Wirkungsfeld beeinflußt wird. Darüber hinaus ergibt sich für gewisse Anwendungsbereiche dieses Ausführungsbeispiels der Erfindung durch die Drehbewegung ein außerordent-

- 5 -

0083444

lich guter Polarisationswirkungsgrad.

Drucksprünge werden innerhalb des Flüssigkeitsaufbereiters im wesentlichen dadurch vermieden, daß die Tiefe der spiralförmig geschraubten Kanäle in Durchströmrichtung stetig abnimmt, und stufenlos in den äußeren Kegelmantel des Rotors ausläuft. Hierbei ist berücksichtigt, daß auch die Strömungsgeschwindigkeit der Durchtrittsströmung in den einzelnen Kanälen nahezu konstant bleibt, so daß der strömungstechnische Wirkungsgrad auf einem sehr hohen Niveau gehalten werden kann.

Wenn das Gehäuse zweiteilig hergestellt wird, wird die Möglichkeit eröffnet, die Innenoberfläche der Gehäuseteile strömungstechnisch und im Hinblick auf eine optimale Polarisierung zu optimieren, ohne den Fertigungsaufwand übermäßig anheben zu müssen.

Wenn man als Werkstoff für die Herstellung der Vorrichtungsbestandteile Polycarbonat wählt, so kann die Vorrichtung äußerst preisgünstig als Massenartikel hergestellt werden, da sich dieser Werkstoff insbesondere für das Spritzgießverfahren eignet.

Durch die Maßnahmen des Anspruchs 10 erreicht man, daß der Wasseraufbereiter mit wenigen Handgriffen in ein bestehendes Leitungssystem integriert oder an vorhandene Absperrorgane wie Hähne oder Ventile angeschlossen werden kann.

Die Erfindungsaufgabe wird durch ein anderes Ausführungsbeispiel dadurch gelöst, daß für die Führung der Flüssigkeit und die Halterung der Permanentmagnete eine Umlenkglocke und ein konzentrisch darin verlaufendes Rohr vorgesehen sind, dessen erstes Ende unter Belassung wenigstens eines Flüssigkeitsdurchlaufes gegenüber der Unterseite der Umlenkglocke angeordnet und dessen entgegengesetztes zweites Ende mit dem Zu- oder Ablaufanschluß eines der beiden Gehäuseteile verbunden ist. Durch diese Ausführungsform wird ein Rotor vermieden und zugleich die Variationsmöglichkeit der Ausbildung magnetischer Felder erhöht. Durch den aus einfachsten Einzelteilen aufgebauten magnetischen Aufbereiter wird eine widerstandsarme Umlenkung der Flüssigkeit vorgenommen und dadurch eine relativ lange Durchlaufstrecke für die magnetische Aufbereitung sichergestellt. Die Permanentmagnete sind an bzw. in den Wänden der Umlenkglocke und/oder des Rohres angeordnet. Sie liegen zumindest zwischen der Innenseite der Umlenkglocke und der Außenseite des Rohres einander gegenüber.

In einem Ausführungsbeispiel sind die Permanentmagnete so an bzw. in den Wänden der Umlenkglocke bzw. des Rohres angeordnet, daß sie sich in Richtung eines Radius gegenüberliegen.

Mit diesem Ausführungsbeispiel wird nicht nur mit einfachsten Mitteln ein widerstandsarmer Strömungsverlauf geschaffen, sondern auch eine optimale magnetische Aufbereitung sichergestellt. An der Außenseite der Umlenkglocke strömt das Wasser an einer Seite des im Flüssigkeitsstrom angeordneten Permanentmagneten vorbei. Nach der Umleitung wird das Wasser entlang eines Ringspaltes zwischen der Außenwand des Rohres und der Innenwand der Umlenkglocke geführt. Hier können die einander gegenüberliegenden Magnete in der Umlenkglocke und im Rohr Felder ausbilden, die besonders optimal auf das Wasser bzw. die Flüssigkeit einwirken. Die aus der Innenwand des Rohres zur Wirkung kommenden Magnetfelder entsprechen denen, die durch die Magnete auf der Außenseite der Umlenkglocke erzeugt werden.

Die Anordnung der Magnete kann je nach Anwendungsfall variiert werden. Es können Permanentmagente zum Einsatz kommen, deren eine dem Flüssigkeitsstrom zugewandte Fläche als Nord- bzw. Südpol und deren andere Fläche als entgegengesetzter Pol ausgebildet ist.
In manchen Anwendungsfällen können auch Permanentmagnete eingesetzt werden, die an ihren Enden Nord- bzw. Südpole aufweisen. Ohne am Kern der Erfindung etwas zu ändern, können die Permanentmagnete in Längsrichtung zum Flüssigkeitsstrom bzw. auch quer zu diesem Strom eingesetzt werden.

Der erfindungsgemäße Aufbau der Umlenkglocke und des darin angeordneten Rohres ermöglichen jeden nur denkbaren Einsatz der Permanentmagnete.

In einem Ausführungsbeispiel weist das Rohr und/oder die Umlenkglocke kreisringförmige Querschnitte auf. In einem anderen Ausführungsbeispiel können Rohre und/oder Umlenkglocke auch einen eckigen, beispielsweise sechseckigen Querschnitt aufweisen. Welche der Querschnittsformen eingesetzt werden, hängt von der Größe des Magnetaufbereiters und der Möglichkeit ab, die jeweils notwendigen Magnete in der Wand der Umlenkglocke bzw. des Rohres unterzubringen.

Konstruktive Einzelheiten des neuen Magneten ergeben sich aus den Unteransprüchen. Die Einzelteile des magnetischen Aufbereiters können so ausgebildet sein, daß sie einfach nur zusammengesteckt werden. Hierzu müssen die Maßtoleranzen zwischen den Einzelteilen entsprechend ausgebildet sein, so daß sich ein strammer Sitz ergibt. In anderen Ausführungsbeispielen sind die Einzelteile des magnetischen Aufbereiters zusammengeklebt.

In einem Ausführungsbeispiel ergibt sich eine aus der Umlenkglocke und dem Rohr bestehende Konstruktionseinheit. Diese kann vorgefertigt und mit den Permanentmagneten versehen werden. Das zweite Ende des Rohres wird dann einfach mit dem unteren Gehäuseteil verbunden.

Von Vorteil ist, daß beide Gehäusehälften identisch gleich sind. Hierdurch erleichtert sich der Zusammenbau und verbilligt sich die Herstellung dieses Magnetaufbereiters. Die Gehäusehälften werden aneinandergeklebt bzw. verschweißt.

Ohne am Kern der Erfindung etwas zu ändern, können die beiden Gehäuseteile auch lösbar miteinander verbunden werden. Hierzu bieten sich an sich bekannte Schraubverbindungen oder andere Verbindungsvarianten, wie beispielsweise eine Konusverbindung an.

Das Gehäuse und die Einzelteile innerhalb des Gehäuses bestehen außer den Permanentmagneten, aus geeignetem Kunststoff. Die Permanentmagnete sind in an sich bekannter Weise Ferrite oder übliche Werkstoffe für Permanentmagnete.

Zur Justage der Einzelteile des Magnetaufbereiters können Arretierungen bzw. Einsenkungen in den entsprechenden Bereichen der Konstruktionselemente vorgesehen sein.

Insgesamt ist der magnetische Aufbereiter so ausgebildet, daß die Durchflußquerschnitte innerhalb des Gerätes nahezu gleich den Durchflußquerschnitten der Anschlüsse sind.

Ausführungsbeispiele der Erfindung werden nachfolgend anhand der Zeichnung erläutert.

Es zeigt:

Figur 1    eine Seitenansicht des Aufbereiters im Teilschnitt,
Figur 2    eine Schnittansicht entlang der Linie II -
           II in Figur 1,
Figur 3    einen Schnitt entlang der Linie III - III in
           Figur 2,

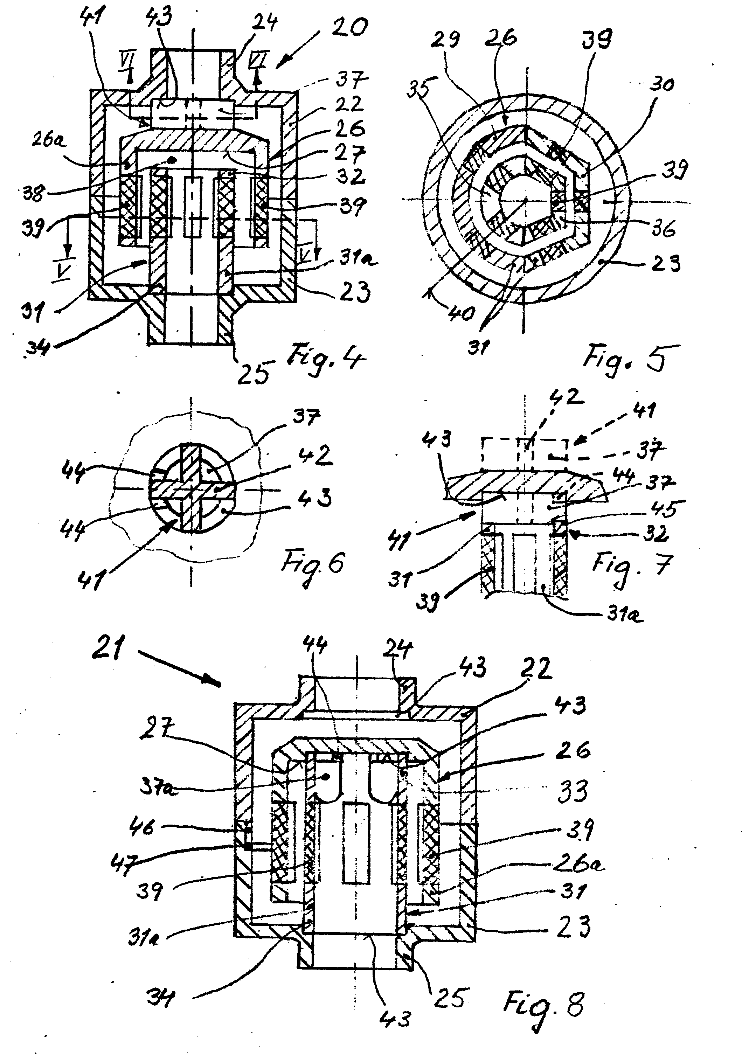

Figur 4    ein zweites Ausführungsbeispiel im Längsschnitt,
Figur 5    eine Seitenansicht entlang der Linie V - V in
           Figur 4,
Figur 6    eine Schnittansicht entlang der Linie VI - VI
           in Figur 4,
Figur 7    ein Konstruktionsdetail und
Figur 8    einen Längsschnitt durch ein weiteres Ausführungsbeispiel der Erfindung.

Der magnetische Flüssigkeitsaufbereiter 1 besitzt ein
zweiteiliges Gehäuse 2 mit einem oberen Gehäuse 2a und
einem unteren Gehäuseteil 2b. Die Gehäuseteile 2a und
2b sind mittels einer Zentrierung ineinandergesteckt,
und im dargestellten Ausführungsbeispiel miteinander
verklebt. Das Gehäuse 2 besitzt eine rotationssymmetrische Außenkontur, wobei das obere Gehäuseteil 2a
einen Anschluß 3a mit einem Innengewinde 4 und das
untere Gehäuseteil 2b einen Anschluß 3b mit Außengewinde 5 besitzt. Die Gewinde 4 und 5 sind jeweils an
eine Dreiviertel-Zollverschraubung angepaßt. Der obere
Anschluß 3a besitzt auf der Innenseite eine ringförmige
Schulter 6, die als Auflagefläche für eine in den Figuren nicht dargestellte Dichtung dient. In analoger
Weise besitzt das untere Gehäuseteil 2b im Bereich
des Anschlusses 3b einen ringförmigen Bund 7, der
ebenfalls als Auflagefläche für einen Dichtungsring
dienen kann.

Das Gehäuse 1 nimmt einen Rotor 8 mit im wesentlichen
drei Abschnitten, nämlich einen zentralen Lagerungsabschnitt 81, einen hohlkegelstumpfförmigen Strömungs-

- 10 -

0083444

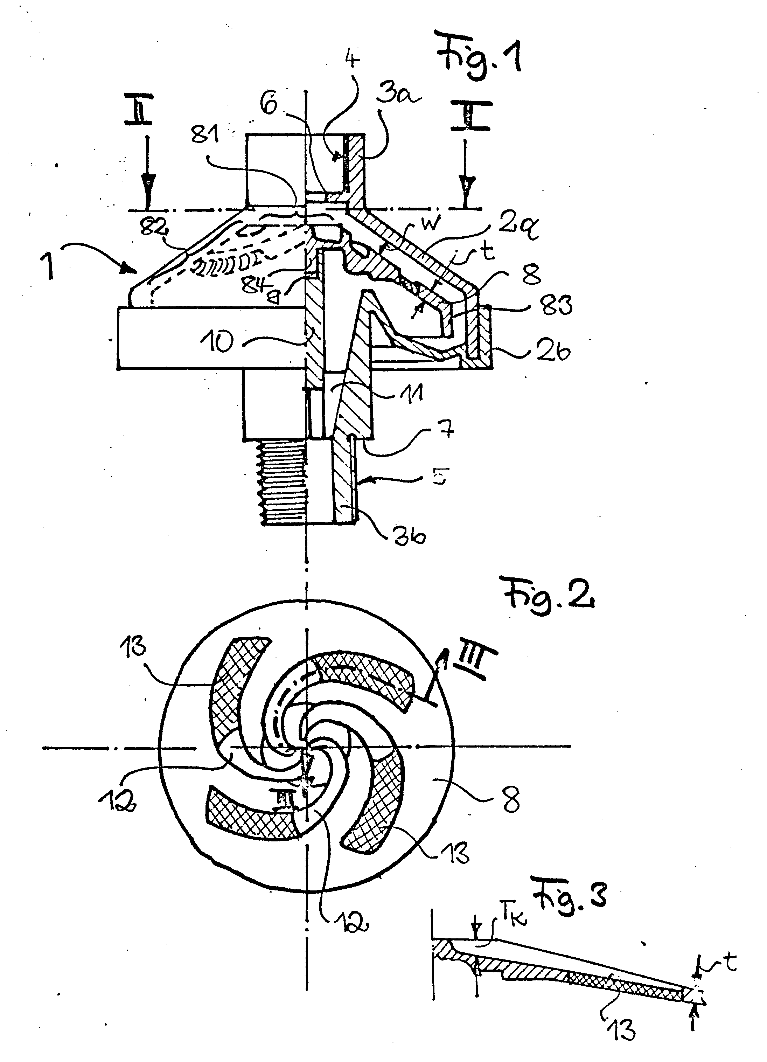

führungsabschnitt 82 und einen hohlzylinderförmigen
Randabschnitt 8 auf. Im zentralen Lagerabschnitt ist
an die Unterseite des Rotors 8 ein Lagerzapfen 84 angeformt, der drehbar in einem Lager 9 eines in Axialrichtung des Gehäuses 2 verlaufenden Lagerschaft 10
gelagter ist, der über mehrere radiale Rippen 11 beispielsweise einstückig mit dem unteren Gehäuseteil 2b
verbunden ist. Die Form des Rotors ist der Innenkontur des Gehäuses 2 derart angepaßt, daß der zwischen
Rotor 8 und Gehäuse 2 verbleibende Durchströmraum eine
annäherend gleichbleibende Weite W besitzt. Der Rotor
8 weist ferner eine annähernd gleichbleibende Dicke t
auf, wobei Massenkonzentrationen vermieden werden. Wie
insbesondere aus Figur 2 ersichtlich ist, sind auf der
Oberseite des Rotors 8 mehrere spiralenförmig geschraubte
Kanäle 12 vorgesehen (beispielsweise eingeformt) deren
Krümmung in Durchströmrichtung stetig kleiner wird.
Die spiralenförmig ausgebildeten Kanäle 12 besitzen
ferner eine Kanaltiefe $T_K$, die in Strömungsrichtung,
ausgehend von einem Maximalwert auf der Oberseite des
Rotors 8, stetig abnimmt. Im letzten Abschnitt der
Kanäle 12 ist im Kanalgrund ein Permanentmagnet 13
vorgesehen, der beispielsweise aus einem technischen
Ferrit besteht. Der Permanentmagnet 13 ist, wie die
Figuren erkennen lassen, so in den Rotor 8 integriert,
daß er nur an seinen Rändern vom Rotationskörper gehalten ist. Mit anderen Worten: Der Permanentmagnet
13 besitzt eine Dicke, die der Stärk t des Rotors 8
entspricht. Auf diese Weise wird die Strömung sowohl
auf der Oberseite des Rotors 8 als auch auf dessen
Unterseite einem starken Magnetfeld ohne Störung ausgesetzt.

Wenn die in den Figuren 1 - 3 gezeigte Vorrichtung an
ein Leitungssystem für wässrige Lösungen angeschlossen
ist, so bewirkt die strömende Flüssigkeit in den spiralförmig ausgebildeten Kanälen 12 eine Drehung des Rotor 8, wodurch die Strömungsumlenkung in Bezug zur Länge der Magnetisierungs- bzw. Polarisierungsstrecke verhältnismäßig klein wird. Durch die Drehung des Rotors 8 wird die Flüssigkeitsströmung auf der Unterseite des Rotors vor dem Verlassen des Gehäuses 2 mehrfach von den umlaufenden Magneten überstrichen und so einem weiteren intensiven Magnetfeld ausgesetzt. Auf diese Weise wird der Polarisationswirkungsgrad trotz kleiner und vor allen Dingen raumsparender Magnete auf einem sehr hohen Niveau gehalten.

Zur besseren Überwachung der Funktionsweise der Vorrichtung ist es vorteilhaft, wenn eine Gehäusehälfte 2a oder 2b aus transparentem Werkstoff besteht.

Die Polarisierung der Permanentmagnete ist vorzugsweise so gewählt, daß die Magnetfeldlinien von der Oberseite zur Unterseite des Permanentmagneten verlaufen. Es kann jedoch auch vorteilhaft sein, die Polarisierung so vorzugeben, daß die Feldlinien in Durchströmungsrichtung verlaufen, wobei auf der Oberseite und auf der Unterseite des Permanentmagneten unterschiedliche Polarisierungen vorgesehen sein können.

Figur 4 zeigt ein weiteres Ausführungsbeispiel eines magnetischen Flüssigkeitsaufbereiters 20, der aus zwei gleichen Gehäuseteilen 22 und 23 besteht. Die Gehäuseteile 22 und 23 weisen Anschlüsse 24 und 25 auf, die wahlweise an beliebige, nicht dargestellte Schlauch- bzw. Wasserleitungen aber auch Absperrorgane wie Hähne oder Ventile angeschlossen werden können. Die Ausbildung der Anschlüsse 24 und 25 ist im einzelnen nicht dargestellt. Ohne am Kern der Erfindung etwas zu ändern, können Gewindeanschlüsse oder Anschlüsse mit profilierten Oberflächenbereichen, aber auch Steckanschlüsse zum Einsatz kommen.

Wesentlich ist, daß der magnetische Flüssigkeitsaufbereiter 20 nicht nur aus gleichen Gehäuseteilen 22 und 23 besteht, sondern daß er gleichgut in beiden Richtungen von der Flüssigkeit durchströmt werden kann. Bei seinem Einsatz und bei seiner Einfügung in eine flüssigkeitsführende Leitung braucht nicht darauf geachtet zu werden, daß der Zulauf durch den Anschluß 24 oder den Anschluß 25 erfolgt.

Innerhalb des magnetischen Flüssigkeitsaufbereiters 20 ist eine Umlenkglocke 26 und ein konzentrisch in diese Glocke hineinragendes Rohr 31 erkennbar. Beide Teile dienen der Führung der Flüssigkeit und der Halterung von Permanentmagneten 39. Das sogenannte erste Ende 32 des Rohres 31 ist unter Belassung eines Flüssigkeitsdurchlaufes 38 gegenüber der Unterseite 27 der Umlenkglocke 26 angeordnet.

Das entgegengesetzte zweite Ende 34 des Rohres 31 ist mit dem Zu- oder Ablaufanschluß 24 bzw. 25 eines der beiden Gehäuseteile 22, 23 verbunden.

Die Permamentmagnete 39 sind an bzw. in der Wand 26a der Umlenkglocke 26 und/oder an bzw. in der Wand 31a des Rohres 31 angeordnet. Im dargestellten Ausführungsbeispiel sind die Permanentmagnete 39 genauso dick wie die Wände 26a bzw. 31a. Auf diese Art und Weise wirken die Magnetfelder der Permanentmagnete 39 ohne Beeinträchtigung auf die strömende Flüssigkeit ein.

Im dargestellten Ausführungsbeispiel gemäß Eigur 4 sind rechteckige Magnetplättchen 39 erkennbar. Sie können entweder so ausgebildet sein, daß die eine Seite des Magnetplättchens als Nordpol und die gegenüberliegende Oberfläche als Südpol oder umgekehrt ausgebildet ist. Ohne am Kern der Erfindung etwas zu ändern, können die Magnetplättchen aber auch so magnetisiert sein, daß ein Ende als Nordpol und das gegenüberliegende Ende als Südpol ausgebildet ist.

Je nach Anwendungszweck wird man die eine oder andere Ausbildungsform der Permanentmagnete 39 einsetzen, wobei auch die ausgewählte Anzahl der Magnete vom Anwendungsfall bestimmt ist. Im in Figur 4 dargestellten Ausführungsbeispiel fließt Flüssigkeit zwischen der Wand 26a der Umlenkglocke 26 und der gegenüberliegenden Wände der Gehäuseteile 22 bzw. 23 hindurch, wobei die Flüssigkeit nur einerseits durch das Magnetfeld beeinflußt wird. Die Flüssigkeit kehrt dann ihre Strömungsrichtung im unteren Bereich des magnetischen Flüssigkeitsaufbereiters 20 um und steigt nach oben, wobei sie beidseitig von Permanentmagneten 39 zumindest teilweise begrenzt wird. Der Umfang der Begrenzung hängt von der freiwälbaren Größe der Permanentmagnete 39 ab.

Der Flüssigkeitsstrom kehrt nach Durchfluß durch den zwischen Rohr und Umlenkglocke gebildeten Ringspalt ihre Strömungsrichtung erneut um und gelangt, gemäß dem in Figur 4 dargestellten Ausführungsbeispiel in senkrechter Richtung, zum Anschluß 25, wobei wieder einseitig wirksame Permanentmagnete 39 passiert werden. Es ist erkennbar, daß bei dieser Anordnung, die sich durch besonders einfach gestaltete Einzelteile auszeichnet, kaum ein nennenswerter Strömungswiderstand ausbildet, wobei andererseits durch Auswahl und Anordnung der Permanentmagnete 39 eine außerordentlich große Variationsmöglichkeit in der Gestaltung der Magnetfelder gebildet wird.

Gemäß Figur 4 ist die Umlenkglocke 26 mittels eines Abstandshalters 41, der in Figur 6 im Querschnitt dargestellt ist, mit dem Gehäuseteil 22 verbunden. Auf eine nicht dargestellte Weise kann der Abstandshalter 41 auf die obere Fläche der Umlenkglocke 26 aufgeklebt sein.

Konzentrisch um den Anschluß 24 herum ist ein kreisförmiger Recess 43 vorgesehen, der die andere Seite des Abstandshalters 41 aufnimmt. Um die Flügel 42 des Abstandshalters festzulegen, können Arretierungen 44 vorgesehen sein, die sich deutlich der Figur 6 entnehmen lassen. Die Arretierungen 44 können auch an allen Enden der Flügel 42 vorgesehen und so bemessen sein, daß der Abstandshalter 41 im Klemmsitz festgehalten wird. Ohne am Kern der Erfindung etwas zu ändern, kann die Verbindung zwischen dem Abstandshalter 41 und dem Gehäuseteil 22 auch durch Kleben herbeigeführt werden.

Figur 5 zeigt einen Schnitt entlang der Linie II, II in Figur 4 und läßt erkennen, daß der Querschnitt durch das Gehäuseteil 23 kreisringförmig ist. Auf der linken Seite der Figur 5 ist angedeutet, daß die Umlenkglocke 26 einen kreisringförmigen Querschnitt 29 aufweisen kann und daß auch das Rohr 31 einen kreisringförmigen Querschnitt 35 haben kann.

Auf der rechten Seite der Figur 5 sind beide Teile mit einem eckigen Querschnitt 30 bzw. eckigen Querschnitt 36 dargestellt. Welcher Querschnitt zum Einsatz kommt, hängt im wesentlichen von der Größe des magnetischen Flüssigkeitsaufbereiters 20 und von der Art und Weise ab, wie die Permanentmagnete 39 in die Wände 26a bzw. 31a integriert werden.

Figur 7 läßt ein Konstruktionsdetail erkennen, bei dem zwei Abstandshalter 41 mit Flügeln 42 zum Einsatz kommen. Durch die Ausbildung der Flügel weisen diese Abstandshalter Flüssigkeitsdurchläufe 37 auf, die den Durchflußquerschnitt nicht beeinträchtigen. Nach Figur 7 kann die Umlenkglocke 26 durch eine Steck- bzw. Klebverbindung mit dem ersten Ende 32 des Rohres 31 verbunden werden. Dadurch entsteht eine Montageeinheit aus der Umlenkglocke 26 und dem Rohr 31, die vor dem Zusammenbau des Aufbereiters vorgefertigt werden kann. Zur Justierung sind Arretierungen 44 oder Einsenkungen 45, beispielsweise in den oberen Rand des Rohres 31 vorgesehen.

Wenn zwei Abstandshalter 41 benutzt werden, kann der gesamte Flüssigkeitsaufbereiter vor dem Zusammenbau der beiden Gehäusehälften 22 bzw. 23 durch Steckverbindungen zusammengefügt werden. Ohne am Kern der Erfindung etwas zu ändern, können die beiden Gehäusehälften 22 und 23 auch auf andere, nicht dargestellte Weise, zusammengehalten werden. Es ist üblich, derartige Teile thermisch durch eine Schweißung zusammenzufügen.

Figur 8 schließlich zeigt ein weiteres Ausführungsbeispiel eines magnetischen Flüssigkeitsaufbereiters 21, der auch aus zwei gleichen Gehäuseteilen 22 und 23 besteht. Auf der Unterseite 27 der Umlenkglocke 26 ist ein kreisförmiger Recess 43 eingearbeitet, der mit Arretierungen 44 zum Justieren des ersten Endes 33 des Rohres 31 versehen ist. Das erste Ende 33 des Rohres 31 weist Flüssigkeitsdurchläufe 37a auf, zwischen denen Streben aus dem Material des Rohres 31 verbleiben. Mit Hilfe dieser Streben kann eine Steck- bzw. Klebverbindung zwischen dem Rohr 31 und der Umlenkglocke 26 herbeigeführt werden. Das zweite Ende 34 des Rohres 31 sitzt in einem kreisringförmigen Recess 43 im unteren Gehäuseteil 23.

Figur 5 läßt erkennen, daß sich die Permanentmagnete 39 im Rohr 31 und in der Umlenkglocke 26 in Richtung eines Radius 40 gegenüberliegen können.

Die linke Seite der letzten Figur zeigt, daß die Gehäuseteile 22, 23 auch lösbar, beispielsweise durch ein Gewinde 46, miteinander verbunden sein können. Dabei ist ein Dichtring 47 vorgesehen. Anstelle des Gewindes 46 kann auch ein an sich bekannter, nicht dargestellter
Bajonettverschluß oder eine bekannte konische Abdichtung zum Einsatz kommen. Die lösbare Verbindung beider
Gehäuseteile ist immer dann vorzuziehen, wenn beispielsweise im Gehäuse angeordnete Teile ausgetauscht oder ersetzt werden müssen.

## Magnetischer Aufbereiter für Flüssigkeiten

Liste der verwendeten Bezeichnungen

1 magnetischer Flüssigkeitsaufbereiter
2 zweiteiliges Gehäuse
2a oberes Gehäuseteil
2b unteres Gehäuseteil
3a Anschluß
4 Innengewinde
3b Anschluß
5 Außengewinde
6 ringförmige Schulter
7 ringförmiger Bund
8 Rotor
81 zentraler Lagerabschnitt
82 hohlkegelstumpfförmiger Strömungsführungsabschnitt
83 hohlzylinderförmiger Randabschnitt
84 Lagerzapfen 9
10 Lagerschaft
11 Rippe
12 Kanal
13 Permanentmagnet
14
15
16
17
18

- 18 -

0083444

19

20 Flüssigkeitsaufbereiter

21 Flüssigkeitsaufbereiter

22 Gehäuseteil

23 Gehäuseteil

24 Anschluß

25 Anschluß

26 Umlenkglocke

26a Wand

27 Unterseite

28

29 kreisringförmiger Querschnitt

30 eckiger Querschnitt

31 Rohr

31a Wand

32 erstes Ende

33 erstes Ende

34 zweites Ende

35 kreisringförmiger Querschnitt

36 eckiger Querschnitt

37 Flüssigkeitsdurchlauf

37a Flüssigkeitsdurchlauf

38 Flüssigkeitsdurchlauf

39 Permanentmagnet

40 Radius

41 Abstandshalter

42 Flügel

43 Kreis bzw. kreisringförmiger Recess

44 Arretierung

45 Einsenkung

- 19 -

Patentansprüche

1. Magnetischer Aufbereiter für Flüssigkeiten, vorzugsweise Wasser, mit einem zweiteiligen Gehäuse, welches außen Anschlüsse für flüssigkeitsführende Zu- oder Ableitungen bzw. Absperrorgane wie Hähne, Ventile o.dgl. und innen eine Anordnung für die Führung der Flüssigkeit und die Halterung wenigstens eines Permanentmagneten aufweist dadurch gekennzeichnet, daß das Gehäuse (2) einen Rotor (8) aufnimmt, in dem zumindest ein spiralförmig geschraubter Kanal (12) eingegliedert ist, der zumindest streckenweise von einem Permanentmagneten (13) begrenzt ist.

2. Magnetischer Aufbereiter nach Anspruch 1 dadurch gekennzeichnet, daß der Rotor (8) im wesentlichen die Form eines hohlen, sich in Durchströmrichtung erweiternden Kegelstumpfes mit annähernd gleichbleibender Dicke (t) aufweist, und das Gehäuse (2) die innere und die äußere Kegelstumpfmantelfläche zur Ausbildung eines Durchströmkanals mit im wesentlichen konstanten Durchtrittsquerschnitten (W) umgibt.

3. Magnetischer Aufbereiter nach den Ansprüchen 1 und 2 dadurch gekennzeichnet, daß der Rotor (8) unmittelbar unterhalb des Anschlusses (3a) in einem Gleitlager (9) geführt ist, das in einem axialen Lagerschaft (10) angeordnet ist, der über mehrere Rippen
(11) mit dem unteren Gehäuseteil (2b) des Gehäuses
(2) verbunden ist.

4. Magnetischer Flüssigkeitsaufbereiter nach einem der
Ansprüche 1 - 3 dadurch gekennzeichnet, daß der Permanentmagnet (13) die gleiche Dicke (t) aufweist
wie der Rotor (8).

5. Magnetischer Flüssigkeitsaufbereiter nach einem der
Ansprüche 1 - 4 dadurch gekennzeichnet, daß mehrere
spiralförmig geschraubte Kanäle (12) vorgesehen sind,
die in Umfangsrichtung gleichmäßig verteilt angeordnet sind und eine in Strömungsrichtung abnehmende
Krümmung besitzen.

6. Magnetischer Flüssigkeitsaufbereiter nach einem der
Ansprüche 1 - 5 dadurch gekennzeichnet, daß die
Tiefe ($T_K$) der spiralförmig geschraubten Kanäle (12)
in Durchströmrichtung stetig abnimmt und stufenlos
in den äußeren Kegelmantel des Rotors (8) ausläuft.

7. Magnetischer Flüssigkeitsaufbereiter nach einem der
Ansprüche 1 - 6 dadurch gekennzeichnet, daß das Gehäuse (2) aus zwei Gehäuseteilen (2a, 2b) zusammengeklebt ist.

8. Magnetischer Flüssigkeitsaufbereiter nach Anspruch 7
dadurch gekenzeichnet, daß zumindest ein Gehäuseteil
(2a oder 2b) transparent ist.

9. Vorrichtung nach einem oder mehreren der vorangehenden oder folgenden Ansprüche dadurch gekennzeichnet,
daß die Bestandteile des Aufbereiters (1) aus Kunststoff, vorzugsweise Polycarbonat, bestehen.

10. Vorrichtung nach einem oder mehreren der vorangehenden oder nachfolgenden Ansprüche gekennzeichnet durch ein Innengewinde (4) am Zuströmanschluß, und ein Außengewinde (5) am Abströmanschluß (3b).

11. Magnetischer Aufbereiter für Flüssigkeiten, vorzugsweise Wasser, mit einem zweiteiligen Gehäuse, welches außen Anschlüsse für flüssigkeitsführende Zu- oder Ableitungen bzw. Absperrorgane wie Hähne, Ventile o.dgl. und innen eine Anordnung für die Führung der Flüssigkeit und die Halterung wenigstens eines Permanentmagneten aufweist, dadurch gekennzeichnet, daß für die Führung der Flüssigkeit und die Halterung der Permanentmagnete (39) eine Umlenkglocke (26) und ein konzentrisch darin verlaufendes Rohr (31) vorgesehen sind, dessen erstes Ende (32, 33) unter Belassung wenigstens eines Flüssigkeitsdurchlaufes (37, 37a, 38) gegenüber der Unterseite (27) der Umlenkglocke (26) angeordnet und dessen entgegengesetztes zweites Ende (34) mit dem Zu- oder Ablaufanschluß (24, 25) eines der beiden Gehäuseteile (22, 23) verbunden ist.

12. Magnetischer Aufbereiter nach Anspruch 11 dadurch gekennzeichnet, daß die Permanentmagnete (39) an bzw. in der Wand (26a) der Umlenkglocke (26) und/ oder an bzw. in der Wand (31a) des Rohres (31) angeordnet sind.

13. Magnetischer Aufbereiter nach den Ansprüchen 11 und 12 dadurch gekennzeichnet, daß sich die Permanentmagnete (39) an bzw. in den Wänden (26a, 31a) der Umlenkglocke (26) bzw. des Rohres (31) in Richtung eines Radius (40) gegenüberliegen.

14. Magnetischer Aufbereiter nach den Ansprüchen 11 - 13 dadurch gekennzeichnet, daß das Rohr (31) und/ oder die Umlenkglocke (26) kreisringförmigen (29, 35) bzw. eckigen (30, 36) Querschnitt aufweisen.

15. Magnetischer Aufbereiter nach den Ansprüchen 11 - 14 dadurch gekennzeichnet, daß die Umlenkglocke (26) mittels eines wenigstens einen Flüssigkeitsdurchlauf (37) aufweisenden Abstandshalter (41, 42) mit einem Zu- bzw. Ablaufanschluß (24, 25) verbunden ist.

16. Magnetischer Aufbereiter nach den Ansprüchen 11 - 14 dadurch gekennzeichnet, daß die Umlenkglocke (26) mittels eines wenigestens einen Flüssigkeitsdurchlauf (37) aufweisenden Abstandshalter (41, 42) mit dem ersten Ende (32) des Rohres (31) verbunden ist.

17. Magnetischer Aufbereiter nach den Ansprüchen 11 - 14 dadurch gekennzeichnet, daß die Umlenkglocke (26) mit dem wenigstens einen Flüssigkeitsdurchlauf (37a) aufweisenden ersten Ende (33) des Rohres (31) verbunden ist.

18. Magnetischer Aufbereiter nach den Ansprüchen 11 - 14 dadurch gekennzeichnet, daß das erste Ende (32) des Rohres (31) und die Unterseite (27) der Umlenkglocke (26) sowie diese mit einem Zu- bzw. Ablaufanschluß (24, 25) je mittels eines wenigstens einen Flüssigkeitsdurchlauf (37) aufweisenden Abstandshalter (41, 42) verbunden sind.

19. Magnetischer Aufbereiter nach den Ansprüchen 11 - 18 dadurch gekennzeichnet, daß an der Innenseite der Gehäuseteile (22, 23) und/oder an der Unterseite (27) der Umlenkglocke (26) konzentrisch zu den Anschlüssen (24, 25) kreis- bzw. kreisringförmige Recesse (43) für das zweite Ende (34) des Rohres (31) und/oder für einen Abstandshalter (41, 42) vorgesehen sind.

20. Magnetischer Aufbereiter nach den Ansprüchen 11 - 19 dadurch gekennzeichnet, daß zur Justage von Rohr (31) und Umlenkglocke (26) Arretierungen (44) bzw. Einsenkungen (45) für die Abstandshalter (41, 42) in den kreis- bzw. kreisringförmigen Recessen (43) und/oder im ersten Ende (32) des Rohres (31) vorgesehen sind.

21. Magnetischer Aufbereiter nach den Ansprüchen 11 - 20 dadurch gekennzeichnet, daß die Durchlaufquerschnitte innerhalb des magnetischen Flüssigkeitsaufbereiters (20, 21) und in den Anschlüssen (24, 25) nahezu gleich sind.

22. Magnetischer Aufbereiter nach einem oder mehreren der vorangehenden Ansprüche, dadurch gekennzeichnet, daß die Gehäuseteile (2a, 2b; 22, 23) lösbar miteinander verbunden sind.

**Fig.1**

**Fig.2**

**Fig.3**

Fig. 4

Fig. 5

Fig. 6

Fig. 7

Fig. 8

Europäisches
Patentamt

**EUROPÄISCHER RECHERCHENBERICHT**

008344

Nummer der Anmeldung

EP 82 11 2008

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 226 720 (M.F. BRIGANTE) * Insgesamt * | 1-22 | C 02 F 1/48 B 03 C 1/12 B 03 C 1/28 |
| A | CHEMAPERM MAGNET-FILTER, August 1952, CHEMAPERM GMBH, Lünen, DE * Seiten 22-25 * | 1-22 | |
| A | LU-A- 29 833 (VERMEIREN) * Seiten 4-6 * | 1-22 | |
| A | BE-A- 524 111 (ARGO) * Insgesamt * | 1-22 | |
| A | GB-A-1 010 806 (ASHTON FILTRATION) | | |
| A | US-A-3 951 807 (C.H. SANDERSON) | | **RECHERCHIERTE SACHGEBIETE (Int. Cl. 3)** |
| A | FR-A-1 254 914 (O. FJELDSEND) | | C 02 F B 03 C |

Der vorliegende Recherchenbericht wurde für alle Patentansprüche erstellt.

| Recherchenort DEN HAAG | Abschlußdatum der Recherche 07-04-1983 | Prüfer VAN AKOLEYEN H.T.M. |
|---|---|---|